Europäisches Patentamt

European Patent Office

Office européen des brevets

(11) Publication number: **0 216 479 B2**

(12) NEW EUROPEAN PATENT
SPECIFICATION

(45) Date of publication of the new patent specification:
**24.08.94**

(51) Int. Cl.5: **C08F 246/00**, C08F 220/28,
C08F 216/14, C09D 7/00

(21) Application number: **86306081.0**

(22) Date of filing: **06.08.86**

(54) **Polymeric thickeners and their production.**

(30) Priority: **12.08.85 GB 8520218**
**14.02.86 GB 8603651**
**14.02.86 GB 8603652**
**14.02.86 GB 8603653**

(43) Date of publication of application:
**01.04.87 Bulletin 87/14**

(45) Publication of the grant of the patent:
**13.02.91 Bulletin 91/07**

(45) Mention of the opposition decision:
**24.08.94 Bulletin 94/34**

(84) Designated Contracting States:
**AT BE CH DE FR GB IT LI LU NL SE**

(56) References cited:
**EP-A- 0 003 235**
**EP-A- 0 056 627**
**FR-A- 2 007 379**
**US-A- 4 384 096**

(73) Proprietor: **ALLIED COLLOIDS LIMITED**
**P.O. Box 38,**
**Low Moor**
**Bradford, West Yorkshire BD12 0JZ (GB)**

(72) Inventor: **Farrar, David**
**13 Greenfield Lane**
**Idle**
**Bradford West Yorkshire (GB)**
Inventor: **Hawe, Malcolm**
**3 Broombank**
**Birkby**
**Huddersfield West Yorkshire (GB)**

(74) Representative: **Lawrence, Peter Robin**
**Broughton et al**
**GILL JENNINGS & EVERY,**
**Broadgate House,**
**7 Eldon Street**
**London EC2M 7LH (GB)**

EP 0 216 479 B2

Rank Xerox (UK) Business Services
(3.10/3.09/3.3.3)

**Description**

It is known that aqueous media can be thickened by the presence of high molecular weight synthetic polymers either in solution or in the form of swollen particles. If the polymers are in solution the thickening is probably due to entanglement of polymeric chains. If the polymers are swollen the thickening is probably due to inter-particulate attraction and solvent immobilisation.

It Is known that thickening in some instances can be improved by including in the polymer pendant hydrophobic groups, the improvement apparently being due to association between the hydrophobic groups in adjacent molecules and the polymers containing such groups are often referred to as associative thickeners.

GB 1,167,524 describes thickeners that are said to be effective in solutions of surface active agents and that are copolymers of at least one ethylenically unsaturated monomer with a comonomer that is, for instance, an acrylic ester or an allyl ether of a polyalkoxylated alcohol that may be aliphatic or aromatic. This polyalkoxylated alcohol thus provides the pendant hydrophobic groups. Particular allyl ethers of this general type, and copolymers formed from them, are also described in GB 1,273,552.

All the examples in these patents of copolymers using allyl ether show the copolymer to be soluble in water. The comonomer with the ether or ester is said to be acrylic acid, acrylamide, vinyl pyrollidone or maleic anhydride or a blend of maleic anhydride with a compound which normally copolymerises in alternating sequence. The use of maleic anhydride alone or in such a blend will tend to give a low molecular weight compared to the values currently available when copolymerising, for instance, acrylic acid.

In most of the examples the comonomer is maleic anhydride, optionally with methyl vinyl ether, but in example 12 of GB 1,167,524 and example 8 of GB 1,273,552 the allyl ether is copolymerised with acrylic acid to form a water soluble polymer. The information in each example suggests that the molecular weight is low.

In all of the examples showing the use of allyl ethers, polymerisation is conducted by precipitation polymerisation. Thus polymerisation is conducted in a liquid that is a solvent for the monomer but not for the polymer, so that polymer is precipitated out of the solution during polymerisation. This technique tends to produce rather low molecular weights.

The intention to form low molecular weight compounds is emphasised by example 13 of GB 1,167,524 in which a copolymer is formed by aqueous solution polymerisation of acrylamide and an acrylic ester with a polyethoxylated nonyl phenyl alcohol since isopropanol is included in the polymerisation mixture. This will ensure that a relatively low molecular weight polymer is produced.

It is well known that allyl monomers polymerise much less readily, and yield copolymers of lower molecular weights, than acrylic or other vinyl monomers. In US 4451628 allyl sulphonate is used to depress molecular weight Another allyl monomer is diallyl dimethyl ammonium chloride and it is well known that polymers of this generally have a maximum molecular weight of below 500,000.

The fact that the use of allyl monomers causes the resultant home- or co-polymer be of low molecular weight is discussed frequently in the literature, for instance in "Functional Monomers" Volume 1 edited by Yocum and Nyquist pages 384 to 387. It is stated in this that allyl monomers polymerise with difficulty to give products of low molecular weight and their presence will retard both the rate and degree of polymerisation of other copolymerisable monomers. It is stated that the polymersation kinetics of allyl monomers are determined by degradative chain transfer which results in the formation of a stable radical that has low activity for chain propogation. The article describes ways of trying to obtain higher molecular weights but the highest value obtainable is said to have a degree of polymerisation of the order of 1,000 to 10,000. The molecular weight is therefore still low by the standards of acrylic or other vinyl monomers since these can easily be polymerised to molecular weights in the range 10 million to 30 million, provided chain transfer agent is omitted.

Since the techniques and comonomers that were specifically described in GB 1,167,524 were all such as to lead inevitably to relatively low molecular weight polymers it was reasonable to propose the use of allyl ether monomers. They would be expected to give the sort of molecular weights that clearly were intended to be achieved in the processes of that patent and GB 1,273,552. In practice the products of these patents have not proved commercially very successful.

In marked contrast to these low molecular weight allyl ether and acrylate copolymers has been the commercial success of associative polymers formed solely from acrylic monomers and by techniques that would normally be expected to give high molecular weights. The literature relating to these polymers generally indicates molecular weights in the range 100,000 (in the presence of chain transfer agent) to several million. Instead of making the polymers in the presence of a relatively large amount of isopropanol or by precipitation polymerisation or using comonomers such as maleic anhydride blends, all of which will

2

tend to give low molecular weights, the successful associative thickeners are generally made by oil-in-water emulsion polymerisation or by aqueous solution or gel polymerisation, and can have very high molecular weights. If for a particular purpose the highest molecular weights are to be avoided very low amounts of chain transfer agent are incorporated to depress molecular weight but the resultant molecular weights will generally still be well above those made by the processes described in GB 1167524 and 1273552.

In EP 48094 the pendant hydrophobic group is introduced as a polymerisation initiator or chain transfer agent (tending to depress molecular weight) in the polymerisation of acrylamide. In EP 63018 and U.S. 4,423,199 and 4,524,175 the hydrophobic group is introduced as a substituent in acrylamide.

The JP 60-235815A the pendant hydrophobic group is introduced as a vinyl ether.

The great majority of literature on associative thickeners, and all commercial products, introduces the hydrophobic group as an ester of an unsaturated carboxylic acid (generally (meth) acrylic add) that is copolymerised with one or more monomers that are always vinylic, and are usually (meth) acrylic. Thus in U.S. 3,915,921 and U.S. 4,190,562 the hydrophobic group is introduced as a $C_{10-30}$ alkyl ester of (meth) acrylic acid. In U.S. 4,138,381, 4,268,641, 4,384,096 and 4,463,151, EP 13836 and EP 109820 and in GB 1,167,524 an ester is formed between an unsaturated acid and a hydrocarbyl ether of a polyalkylene glycol.

When the polymers are linear it is clear that increasing molecular weight generally gives increasing thickening properties (although it may also give flocculation of suspended solids) and so the use of monomers that make it impossible to obtain high the molecular weights is clearly contra-indicated. In those particular instances where lower molecular weight is desired, e.g., if flocculation of suspended solids is to be avoided, then this is best achieved commercially by using the same monomer blend as will give high molecular weight together with a low amount of a chain transfer agent such as a mercaptan.

Similarly, when the polymers are cross linked experience in other polymerisation techniques for making thickeners generally indicates that the best polymer properties are obtained when the cross linked polymer is formed from monomers that in the absence of cross linking agent, would give the highest possible molecular weight. Thus cross linked polymers should also be formed from acrylic monomers in the absence of monomers that will significantly reduce molecular weight.

The present state of the art therefore is that when manufacturing cross linked or, especially, linear polymers that are to be used for, for instance, thickening the best properties generally follow from the use of monomers capable of polymerising to very high molecular weights optionally with a chain transfer agent such as a mercaptan, allyl monomers are known to be incapable of giving high molecular weights, and the processes in GB 1,167,524 and 1,273,552 clearly all gave linear polymers of molecular weights much less than those that would now be considered to be necessary for satisfactory properties.

Polymers such as those described in EP 13836 are made by oil-in-water emulsion polymerisation and swell or dissolve upon the addition of alkali. They have proved commercially successful but there is still considerable room for improvement in their properties.

For instance ore use of the polymers is for thickening aqueous solutions containing an electrolyte. The solutions may therefore have relatively high pH. Also they may be used under conditions of high temperature. Unfortunately high pH and/or high temperature can result in hydrolysis of the ester linkage by which the hydrophobic group is attached.

A problem that is often encountered commercially with thickeners such as in EP 13836 is that they may cause foaming, and print quality (when used in textile printing pastes) may need improvement in some instances.

Despite all the experience indicating that it is essential to use, when making thickeners, only monomers capable of giving high molecular weight polymers, we have now found that a particular class of new polymers formed from monomers including a particular type of allyl monomer have surprisingly valuable thickening properties.

In US 4338239, polymeric thickeners are described that are made from monomers that can include an allyl monomer of a type suitable for use in the invention, but the polymers made from such monomers are subject to variable cross linking since the monomers include glycidyl ether groups and these will react during the polymerization to form crosslinking groups. This technique is unsuitable for the production of polymers of carefully controlled and optimum thickening properties.

A polymer according to the invention is selected from linear polymers having intrinsic viscosity (as herein defined) above 0.5 dl/g, cross linked polymers and polymers that are insoluble and non swellable in water but that are soluble or swellable in aqueous acid or aqueous alkali and which are formed by mixing and then polymerising by oil-in-water emulsion polymerisation

(a) 5 to 90% of ethylenically unsaturated ionic monomer,
(b) 5 to 90% of ethylenically unsaturated substantially non-ionic monomer,

(c) 1 to 100% of ether of the formula $CH_2 = CR'CH_2OB_nR$ where R' is hydrogen or methyl, B is ethyleneoxy, n is zero or an integer, generally 1 to 100, and R is a hydrocarbyl group of 8 to 30 carbons selected from alkyl, aralkyl, aryl, alkaryl and cycloalkyl,

(d) 0 to 1% of cross linking agent, that is a copolymerisable polyethyienically unsaturated monomer.

Throughout this specification all percentages are by weight unless otherwise specified. All intrinsic viscosities are single point intrinsic viscosity as measured at 0.05% polymer concentration in methanol.

The oil-in-water emulsion polymerisation is conducted using sufficient of an appropriate emulsifier, as is conventional. The final polymer is insoluble and substantially unswollen in the aqueous phase of the polymerisation mixture but, due to the ionic monomer, is soluble or swellable upon appropriate pH adjustment, generally to below pH 7 when the monomer (a) is free amine and to above pH 7 when the monomer (a) is free acid. The solubility of the monomers in the aqueous phase may be conventional for oil-in-water emulsion polymerisation. Generally the blend of monomers, and often each monomer, is insoluble in the aqueous phase but some water solubility can be tolerated provided the monomers all migrate during the polymerisation into the micelles of emulsifier.

Monomer (a) is preferably a vinyl, generally acrylic, monomer and may be a co-ionic blend of monomers. When monomer (a) is anionic upon addition of alkali, the monomer and its amount must be such that addition of alkali renders the polymer soluble or swellable. The monomer is generally a carboxylic monomer as free acid during the polymerisation. The monomer generally contains 3 to 8 carbon atoms. It may be a monocarboxylic acid, a dicarboxylic acid or, for instance, a monoalkyl ester of a dicarboxylic acid. The acid may be selected from acrylic, methacrylic, itaconic, crotonic, fumaric, citraconic acryloxypropionic or maleic acids. Preferably at least 50%, and most preferably 100%, of component (a) is provided by methacrylic and/or acrylic acid, with methacrylic being particularly preferred.

When monomer (a) is cationic, the monomer and its amount must be such that the addition of acid or quaternising compound, renders the polymer soluble or swellable. The monomer generally includes a tertiary amine group as a free base during polymerisation and this is then converted to the cationic form as an acid salt or quaternary ammonium salt. Dialkylaminoalkyl (meth) acrylamides may be used. For instance the aminoalkyl group may contain 2-8 carbon atoms, preferably 1, 3-propylene, and the other alkyl groups may contain 1 to 4 carbons. The preferred monomers are dialkylaminoalkyl (meth) acrylates. The preferred monomars are dimethylaminoethyl (meth) acrylates and dimethylaminopropyl (meth) acrylamides.

The amount of monomer (a) must be such that the blend of components (a), (b), (c) and (d) can be polymerised by oil-in-water emulsion polymerisation to form an emulsion of the polymeric thickener in which the polymar is insoluble and substantially unswollen and non-thickening but that, after polymerisation, the emulsion can be converted by addition of alkali or acid into a viscous system thickened by the polymer. It is generally necessary for there to be at least 10%, usually at least 20% and preferably at least 30% of the ionic monomar. The amount is generally below 70%, usually be low 60%.

Monomer (b) is preferably a vinyl, generally acrylic, monomer and may be a blend of monomers. The monomers are generally water insoluble but a minor proportion of monomer (b) may be a water soluble monomar such as acrylamide. By water insoluble monomer in the context of the present specification we mean monomer that is soluble in water to a degree of up to 5% at room temperature. Suitable monomers are styrene and alkyl and/or halo-substituted styrenes, (meth) acrylonitrile, vinyl alkanoates (especially the acetate), vinyl and vinylidene halides (especially the chloride), hydroxy alkyl and alkoxy alkyl (meth) acrylates and alkyl (meth) acrylates. Preferred monomers are styrene, 2-hydroxy ethyl acrylate, acrylonitrile, vinyl chloride and vinyl acetate and the alkyl (meth) acrylates. Preferably at least 50% by weight of component (c), and most preferably 100%, is alkyl (meth) acrylate. In all these monomars any alkyl groups may contain 1 to 8 carbon atoms but particularly preferred monomers are $C_{1-4}$ alkyl (meth) acrylates such as methyl methacrylate, butyl acrylate or, ethyl acrylate.

Monomer (b) is generally present in an amount of at least 15%, usually at least 20% and preferably at least 30%. The amount is generally below 80%, usually below 70% and preferably below 60%.

Normally monomers (a) and (b) are free of hydrophobic groups R and should preferably be conventional low molecular weight monomers.

Monomer (c), which is referred to below as the "allyl ether", preferably includes a polyethoxy chain and son is generally above 2, often above 5 and frequently above 10 or 15 up to 50 or even up to 100. Thus a polyoxyethylene chain between the allyl group and the hydrophobe is generally present but it may be interrupted by oxypropylene and/or oxybutylene groups. By appropriate choice of the values of n, and R it is possible to control the solubility of the monomer and the properties of the final polymer. R' is generally hydrogen.

R is a hydrocarbyl group that contains from 8 to 30, preferably 10 to 24 and most preferably 12 to 18 carbon atoms. It may be selected from alkyl, for instance octyl, lauryl or stearyl, aralkyl such as 2-phenyl

ethyl (-C$_2$H$_4$Ph), aryl such as naphthyl, alkaryl such as alkyl phenyl wherein the alkyl group generally contains 6 to 12 carbon atoms, cycloalkyl (including polycyclic alkyl groups), or mixtures of one or more such groups. Preferred hydrocarbyl groups are alkyl and alkaryl groups. Any of these groups may additionally be substituted provided the substituents do not render the pendant group hydrophilic to an extent that the desired improvement in properties due to the hydrophobic group is lost.

The amount of the allyl ether is at least 1% and usually at least 2%. It is generally below 70% and usually below 50%. Amounts in the range 5 to 30% are often preferred.

The allyl ethers may be made by methods such as those described in GB 1,273,552, for instance by reacting an appropriate surfactant alcohol with sodium or sodium alkoxide, generally in the absence of water but in a solvent such as xylene, to form the sodium derivative and then reacting this with allyl chloride, or by reacting allyl alcohol with the surfactant alcohol with or without catalyst Preferably however the allyl ethers are made by the method described in our copending application filed even date EP-A-0213800.

Monomer (d) is optional and serves as a cross linker. Suitable cross linkers for emulsion polymerised ethylenically unsaturated monomers are well known. They are generally polyethylenically unsaturated monomers materials such as diallyl phthalate, allyl (meth) acrylate, divinyl benzene, (poly) ethylene glycol dimethacrylate and methylene bis acrylamide. If the cross linker is present, its amount is generally in the range 0.0005 to 1% (5 to 10.000 ppm), most preferably 0.001 to 0.2%. For instance, as mentioned below it may be up to 0.1% by weight.

Particularly preferred copolymers are those formed from 20 to 60% by weight acrylic acid and/or methacrylic acid (preferably methacrylic acid alone), 5 to 60% ethyl acrylate or other suitable alkyl (meth) acrylate and 2 to 50% of the allyl ether, optionally with cross linker.

Other preferred polymers are formed from 20 to 60% dialkylaminoalkyl (meth) -acrylate or -acrylamide, 5 to 60% ethyl acrylate or methyl methacrylate or other alkyl (meth) acrylate, with 2 to 50% monomer (c), and optionally (d).

The polymers may have a molecular weight well above 0.5 million and generally above 1 million, eg above 2 million and often above 5 million, when they are prepared in the absence of chain transfer agents. This is far in excess of what would be expected from knowledge of allyl polymerisations in general. However for some purposes the highest molecular weights are undesirable because of the risk of flocculation occurring when the thickener is used in a system containing suspended solids. Accordingly it is sometimes desirable to polymerise in the presence of a chain transfer agent in order to depress molecular weight, eg down to 100000 or 200,000.

The intrinsic viscosity (namely the single point intrinsic viscosity as measured at 0.05% polymer concentration in methanol) of linear polymers is generally at least 0.5 and when there is no solid phase the IV is preferably at least 1 and preferably at least 2,3 or even 5, for instance it may be 5-10 or higher.

Cross linked, emulsion polymerised, polymers are polymers made from monomers (a), (b) and (c) under conditions that would, In the absence of cross linker (d), lead to linear polymers having these preferred molecular weight and viscosity properties.

The emulsion polymerised polymers of the invention differ from those of GB 1,167,524 and 1,273,552 in a number of respects. They are made by oil-in-water emulsion polymerisation, this permitting much higher molecular weights. They are insoluble and unswollen at the pH at which they are manufactured, and soluble or swollen at another, whereas the anionic polymers of GB 1,167,524 are water soluble. The molecular weights that are obtained in the invention can be very much higher than anything obtainable in those patents. The reason for our being able to obtain high molecular weights is not clear but may be due to the effect of the group-BnR on the polymerisation properties of the allyl monomer. The comonomers preferably are such as to permit high molecular weights and preferably are not such as to reduce molecular weight (e.g., maleic anhydride with methyl vinyl ether, as in those patents).

Other disclosures of polymers containing allyl ethers are in EP 0172723, 0172724 and 0172025, none of which were published at the priority date of this application and all of which, so far as the allyl ether disclosure is concerned, have the same priority date as this application.

The polymers differ from the polymers disclosed in, for instance, EP 13836 by omitting the acrylic ester for introducing the hydrophobic group and using instead the defined allyl ether. It is very surprising that this substitution can be made without seriously reducing the molecular weight and without damaging the properties of the polymer. It is surprising that the polymers have viscosity and other properties at least as good as those of EP 13836 and in many respects better. By the invention the risk of the hydrophobic group being hydrolysed out of the polymer chain by thermal or pH hydrolysis of the ester linkage is eliminated. It is also possible to avoid the other problems outlined above.

The oil-in-water emulsion polymerisation may be conducted in conventional manner, for instance as described in EP 13836. Emulsifier is included to maintain the monomer and the polymer in stable dispersed

5

condition and to provide micelles for the polymerisation. When monomar (a) is anionic, suitable emulsifiers are anionic, such as sodium alkyl phenyl ether sulphate or sodium lauryl sulphate or sodium dodecyl benzene sulphonate, but may be non ionic. When monomer (a) is cationic, the emulsifier is preferably non-ionic.

The initiator is preferably a water soluble initiator, most preferably an alkali metal or ammonium persulphate, generally in an amount up to 1% based on the monomers. Preferably polymerisation is started and further monomer is then added. The polymerisation temperature is generally in the range 60 to 100°C.

Although it is generally undesirable, in some instances a chain transfer agent such as an alkyl mercaptan may be added to the monomer in order to depress molecular weight for example to minimise flocculation during thickening.

The amount of monomer, and thus of polymer, in the emulsion is generally from 20 to 60%, most preferably 25 to 50%, based on the weight of emulsion. The emulsion has a pH at which the polymer is insoluble and substantially unswollen in water (7 or below when monomer (a) is anionic and 7 or above when it is cationic) but upon addition of alkali or acid (for anionic or cationic polymers respectively) the polymer dissolves or swells and will form a very viscous composition. The polymer can be isolated from the water after or, preferably, before the adjustment of pH by, for instance, spray or drum drying to form a powder or the polymer may be converted to a concentrated, substantially anhydrous, dispersion in a nonaqueous liquid as described in EP 0172025. Often however it is convenient to use the polymer in the form of the oil-in-water emulsion in which it is initially produced. The pH adjustment may be made to this emulsion before use but preferably the emulsion is added to the phase that is to be thickened while the polymer is still insoluble and unswollen and the polymer is converted to a viscous thickener by reaction with alkali or acid in the aqueous phase. The pH of this aqueous phase may be as high as, for instance, 13 or 14 when the monomer (a) is anionic and as low as 1 or 2 when monomer (a) is cationic.

The emulsion polymerised polymer is generally supplied to the user as an oil-in-water emulsion but if desired may be converted to a water-in-oil dispersion (or a dehydrated product thereof) before use, e.g., as described in EP 172025.

Improved thickening is often achieved in the presence of a surface active agent, generally in an amount of from 0.05 of 1 part by weight surfactant per part by weight polymer. Surfactants that will give this effect may be selected from anionic, nor-ionic, amphoteric or cationic provided they are compatible with the polymer and the other components of the aqueous phase. Preferably they are non-ionic or anionic. Preferred surfactants are ethoxylated linear alkyl ethers or ethoxylated alkyl phenyl ethers. Often the surfactant is the same as or similar to a surfactant alcohol that has been used to form the allyl ether.

The polymers are of particular value for thickening aqueous media containing electrolyte and optionally containing a dispersed phase. For instance the polymers may be used for thickening chemically toxic aqueous compositions. These may be alkaline compositions such as beaches, caustics and paint removers when monomer (a) is anionic. They may be acidic when monomer (a) is cationic. For instance a cationic polymer may be introduced into an enviornment and then thickened by adding acid.

The polymers (especially when monomer (a) is anionic) are of particular value for thickening aqueous latex paints, both matt, semi-matt and gloss paints. These may contain conventional pigments, dispersants and binders.

The polymers (especially when monomer (a) is anionic) are also of great value for thickening textile print pastes. Such systems include for example reactive dye or acid dye, or pigment pastes especially where such pastas are prone to gelling. The other components of the print paste may be conventional. In such pastas they not only have the valuable high shear and low shear viscosity properties that are useful in all thickening situations but they also have the advantage of minimising flushing of the print colour. Particularly good results are obtained in combination with surfactant.

Other uses for the polymers are for thickening oils, as water retention aids, eg in cements, and as deicing fluids, for thickening brine (e.g., downhole), for thickening carpet backing latices and for thickening textile sizing solution. They can also be used for thickening drilling muds and other downhole electrolyte liquors such as for acidising or fracturing especially when the polymer contains cationic groups or sulphonate groups. Other downhole uses include viscosifiers for enhanced oil recovery, drilling fluids or shut off fluids, as fluid loss additives, and for polymer flooding.

The amount of polymer used is generally in the range 0.05 to 5% weight based on the water content of the aqueous phase that is to be thickened.

The polymers can be used for other purposes, e.g., as wallpaper adhesives.

Example 1

An emulsion of momomers in water was prepared by mixing 100 g of ethyl acrylate, 80 g of methacrylic acid, 20 g of allyl ether of 10 mole ethoxylate of stearyl alcohol, 5 g of Periankrol ESD (trade mark), 0.3 g ammonium persulphate and 200 g water. To a reaction vessel containing 2.5 g Periankrol ESD, 0.1 g ammonium persulphate in 255.8 g water at 85°C, degassed for 30 minutes with nitrogen there was added 5% of the monomer emulsion over a period of 10 minutes.

After the initial charge had polymerised at 85°C, the remaining monomer emulsion was gradually added over a period of two hours at 85°C. After completion of the monomer feed, the mixture was held at 85°C for 15 minutes and then 10 g of 1% ammonium persulphate solution was added. After another 45 minutes, the mixture was cooled and filtered.

The filtrate was approximately 30% solids emulsion copolymer in which the polymer composition is 10% of the allyl ether, 50% ethyl acrylate and 40% methacrylic acid.

The polymer thus prepared was designated Product A. Further samples of varying composition were prepared using this procedure. These were designated in turn as Products B-U. Solutions in water were prepared by neutralisation with ammonia to pH 7 or above and the resulting viscosity was measured using a Brookfield RVT viscometer. This data along with composition variables is given in Tables 1a, 1b, and 1c.

Note In table 1

MMA = methacrylic acid

EA = ethyl acrylate

AES = allyl ether surfactant of formula

$CH_2 = CR'CH_2OB_nR$

where R' = H

$B = (CH_2\text{-}CH_2\text{-}O)$

and n and R are as stated.

In table 1a POLYMER H was prepared without using an allyl ether surfactant monomer. This therefore served as a control.

The original measurements were made in centipoises or poises and the units have been converted to Pa•s using the conversion factor $1cP = 1\times10^{-3}$ Pa•s

Table 1a

| PRODUCT | MONOMER RATIOS (% by wt) | | | SURFACTANT COMPOSITIONS | | SOLUTION VISCOSITY (Pa.s) 10 rpm |
|---|---|---|---|---|---|---|
| | MAA | ES | AES | n | R | |
| POLYMER A | 40 | 50 | 10 | 10 | Stearyl | 14.0 |
| POLYMER B | 40 | 50 | 10 | 2 | Stearyl | 8.4 |
| POLYMER C | 40 | 50 | 10 | 20 | Stearyl | 7.2 |
| POLYMER D | 40 | 50 | 10 | 4 | Lauryl | 0.15 |
| POLYMER E | 40 | 50 | 10 | 23 | Lauryl | 0.6 |
| POLYMER F | 40 | 50 | 10 | 30 | $C_{22}$ | 140.0 |
| POLYMER G | 40 | 50 | 10 | 25 | Octylphenyl | 0.5 |
| POLYMER H | 40 | 60 | - | - | - | 90.0 |
| Note: n - dodecyl mercaptan was included in each of the above recipes, at 0.2% on total monomer. | | | | | | |

EP 0 216 479 B2

Table 1b

| PRODUCT | MONOMER RATIOS (% by wt) | | | SURFACTANT COMPOSITIONS | | SOLUTION VISCOSITY (Pa.s) 10rpm |
|---|---|---|---|---|---|---|
| | MAA | EA | AES | n | R | |
| POLYMER J | 40 | 55.0 | 5.0 | 10 | Stearyl | 1.28 |
| POLYMER K | 40 | 52.5 | 7.5 | 10 | Stearyl | 20.8 |
| POLYMER L | 40 | 50.0 | 10.0 | 10 | Stearyl | 26.2 |
| POLYMER M | 40 | 47.5 | 12.5 | 10 | Stearyl | 38.0 |
| POLYMER N | 40 | 45.0 | 15.0 | 10 | Stearyl | 53.6 |
| POLYMER P | 40 | 42.5 | 17.5 | 10 | Stearyl | 72.0 |
| POLYMER Q | 40 | 40.0 | 20.0 | 10 | Stearyl | 93.2 |
| Note: n - dodecyl mercaptan was included in each of the above recipes at 0.1% on total monomer. | | | | | | |

Table 1c

| PRODUCT | MONOMER RATIOS (% by wt) | | | SURFACTANT COMPOSITOINS | | SOLUTION VISCOSITY (Pa.s) 10rpm |
|---|---|---|---|---|---|---|
| | MAA | EA | AES | n | R | |
| POLYMER L | 40 | 50 | 10 | 10 | Stearyl | 100 |
| POLYMER R | 30 | 60 | 10 | 10 | Stearyl | 31 |
| POLYMER S | 25 | 65 | 10 | 10 | Stearyl | 15.8 |
| POLYMER T | 20 | 70 | 10 | 10 | Stearyl | 12.2 |
| POLYMER U | 15 | 75 | 10 | 10 | Stearyl | 0.26 |
| Note: n - dodecyl mercaptan was included in each of the above recipes at 0.1% on total monomer. | | | | | | |

Example 1d

The effectiveness of polymers AA-AF prepared from other alkyl (meth) acrylate/carboxylic acid monomers is shown.

Table 1d

| Product | Monomer Ratio (% by wt.) | | | | | | | | Solution Viscosity (Pa.s) at 10 rpm |
|---|---|---|---|---|---|---|---|---|---|
| | MAA | AA | IA | MA | EA | BA | MMA | AES | |
| Polymer AA | 40 | - | - | 50 | - | - | - | 10 | 76.3 |
| Polymer AB | 40 | - | - | - | - | 50 | - | 10 | 2.4 |
| Polymer AC | 35 | 5 | - | - | 50 | - | - | 10 | 42.4 |
| Polymer AD | 30 | 10 | - | - | 50 | - | - | 10 | 11.3 |
| Polymer AE | 37.5 | - | 2.5 | - | 50 | - | - | 10 | 48.0 |
| Polymer AF | 40 | - | - | - | 25 | - | 25 | 10 | 2.94 |
| Note: n-dodecyl mercaptan was included in each of the above recipes at 0.1% on total monomer. | | | | | | | | | |

The abbreviations used to denote the monomer are as follows:-

MAA  = methacrylic acid
AA   = acrylic acid

IA        = itaconic acid
MA       = methyl acrylate
EA       = ethyl acrylate
BA       = butyl acrylate
MMA   = methyl methacrylate
AES    = allyl ether surfactant as previously defined with n = 10 and R = stearyl.

Example 2

The influence of electrolyte on the thickening efficiency of products of this type was investigated. Three polymers, having compositions as described below were prepared as 2.0% active solutions in deionised water and 0.5% Nacl solution. Solution viscosities were measured using a Brookfield RVT viscometer over a range of speeds as indicated.

POLYMER V:     As POLYMER A but without n-dodecyl mercaptan
POLYMER W:    As POLYMER v but with 250 ppm diallylphthalate.
POLYMER X:     As POLYMER H but with 250 ppm diallylphthalate

Table 2

| PRODUCT | 2.5 rpm | | 10 rpm | | 100 rpm | |
|---|---|---|---|---|---|---|
| | $H_2O$ | 0.5% NaCl | $H_2O$ | 0.5 NaCl | $H_2O$ | 0.5% NaCl |
| POLYMER V | 200 | 272 | 130 | 180 | 28.5 | 35 |
| POLYMER W | 284 | 240 | 180 | 85 | 25 | 22 |
| POLYMER X | 150 | 11.2 | 22 | 3.7 | 4.2 | 0.68 |

Polymer X having no allyl ether surfactant monomer was present to serve as a control.
Polymer V had intrinsic viscosity of 2.5 measured by single point method in methanol at 0.05%.

Example 3

The influence of additional surfactant on the thickening efficiency of products of this type was investigated. To 2.0% active solutions of POLYMER A was added increasing amounts of various surfactants. The solution viscosity was remeasured after each addition, and is listed in Table 3 as an index relative to the initial viscosity in the absence of surfactant.

Table 3

| SURFACTANT TYPE | SURFACTANT CONCENTRATION | | |
|---|---|---|---|
| | 0.1% | 0.2% | 0.3% |
| Lauryl alcohol.4 ethoxylate | 188 | 258 | 271 |
| Stearyl alcohol.10 ethoxylate | 104 | 115 | 135 |
| Sodium Lauryl sulphate | 163 | 625 | 798 |
| Sodium $C_{12}$-$C_{15}$ alcohol ether sulphate | 149 | 214 | 244 |

Example 4

To demonstrate the greater stability attained by linking the hydrophobe through an ether linkage rather than an ester linkage, and to eliminate variables due to other monomers in the polymer, a comparison was conducted between the hydrolytic stability of the ester of acrylic acid with polyoxyethylene (23 moles) lauryl ether and of the ether of the same lauryl ether with allyl alcohol (formed by reacting the sodium derivative of the ether with allyl chloride).

9

A 2.0% solution of each monomer was placed in a thermostated water bath at 45°C. Each was taken to pH 11.0 with 0.0986 M NaOH. The pH was checked every hour and readjusted to pH 11.0 by the addition of further NaOH. The volume of NaOH required was noted and hence the percentage hydrolysis was calculated for each monomer.

Table 4

| TIME hours | ACRYLATE MONOMER | | ALLYL ETHER MONOMER | |
|---|---|---|---|---|
| | Vol NaOH ($cm^3$) | % Hydrolysis | Vol NaOH ($cm^3$) | % Hydrolysis |
| 0 | 1.05 | 0 | 1.00 | 0 |
| 1 | 6.75 | 37.0 | 0 | 0 |
| 2 | 12.70 | 69.7 | 0 | 0 |
| 3 | 18.10 | 99.3 | 0 | 0 |

From this it is apparent that the allyl ether linkage is much more chemically stable than the acrylate linkage.

Example 5

In order to demonstrate the usefulness of polymers of this type for thickening aqueous alkaline solution eg caustics and paint removers, solutions of POLYMER A and POLYMER F were prepared 2.0% active in 10% NaOH solution. The resulting solution viscosities were measured using a Brookfield RVT viscometer over a range of speeds.

Table 5

| PRODUCT | BROOKFIELD VISCOSITY (Pa.s) | | | |
|---|---|---|---|---|
| | 2.5 rpm | 10 rpm | 20 rpm | 100 rpm |
| POLYMER A | 52 | 24.5 | 16 | 4.6 |
| POLYMER F | 54 | 16.5 | 9.0 | 2.5 |

This clearly demonstrates the high level of thickening efficiency which polymers of this type are able to exhibit in such systems.

Example 6

Emulsion Paints

Two matt emulsion paints (MEP1 and 2) were prepared using polymers according to the invention and one (MEP3) using a conventional paint thickener Natrosol 25O HR*. Each paint was made to 65% pigment volume concentration from the following "Mill Base" and "Let Down" recipes.

| Mill Base | Parts by weight |
|---|---|
| Water | 15.00[1]/19.30[2] |
| Dispersing agent | 0.46 |
| Bactericide | 0.05 |
| Hexylene glycol | 1.00 |
| Defoamer | 0.05 |
| Thickener | 1.00[1]/0.30[2] |
| 0.880 ammonia | 0.20 |
| Titanium dioxide | 19.75 |
| Calcium carbonate | 19.75 |
| Talc | 6.59 |
| Let Down | |
| Latex binder | 16.18 |
| Coalescing solvent | 0.80 |
| Water | 18.77[1]/15.37[2] |
| 0.880 ammonia | 0.40 |

1. Quantity used wit aqueous thickener of the invention in paints MEP1 and 2.
2. Quantity used with conventional thickener in paint MEP3.
*Natrosol is a trade mark.

The components of the "Mill Base" were milled under high shear at 2290 rpm to Hegman Gauge 7-8. The components of the "Let Down" were then added at a reduced speed of 890 rpm. The paints were then stored for a period of 7 days at room temperature before characterisation.

Table 6

| Paint Sample Code | Thickener (0.3% dry on total) | Final pH | Brookfield RVT @ 20 rpm (Pa.s) | Stormer Viscosity (Krebs Units) | ICI Rotothinner Viscosity (Poise) |
|---|---|---|---|---|---|
| MEP-1 | POLYMER A | 0.9 | 12.0 | 108 | 0.95 |
| MEP-2 | POLYMER W | 0.9 | 25.2 | 121 | 1.00 |
| MEP-3 | NATROSOL 250HR | 0.91 | 12 | 105 | 0.76 |

Each of the above points was evaluated for its spatter properties using the following test procedure.

A board, approximately 30 × 42 cm was mounted vertically above a work bench the bottom edge being positioned 20 cm above the surface of the bench. A piece of black card measuring 24 × 31.5 cm was then placed on the surface of the bench top directly below the board in order to catch any droplets or "paint mist" spattering from the roller.

Each paint was poured in turn into a roller tray and applied to the vertical board using a lambswool roller. The standard conditions adopted for this test involved 10 upstrokes and downstrokes of the roller on the board. The black card was then removed for inspection. The degree of spatter was assessed visually and rated on a scale of 1-5 with 1 being excellent ; ie no spatter and 5 being very poor ; ie severe spatter. The results recorded were as follows :

| Paint Sample Code | Spatter |
|---|---|
| MEP-1 | 2 - Very Good |
| MEP-2 | 1 - Excellent |
| MEP-3 | 4 Poor |

Example 7

Carpet backing formulations

The use of products of this type as thickeners for carpet backing formulations has been demonstrated according to the following information.

| Formulation | A | B |
|---|---|---|
| Total Solids (nominal) | 76% | 40% |
| Filler: Binder Ratio (dry:dry) | 8:1 | 1:2 |
| Latex Binder (50% active) | 15.6 | 49.5 |
| Calcium carbonate filler | 67.5 | 13.0 |
| Surfactant | 0.1 | 0.1 |
| Dispersant | 1.0 | 1.0 |
| Thickener + water | to 100 | to 100 |

The amount of thickener was selected such that Formulation A had viscosity 9 Pa•s (9000 cp) and B had viscosity 6 Pa•s (6000 cp), Brookfield RVT viscometer, spindle 5 to 10 rpm.

In this instance Polymer E fully neutralised as $Na^+$ salt was compared as thickeners with VISCALEX AH 10 (carboxylated acrylic gel polymer sold by Allied Colloids Limited as a thickener for carpet backing compounds). The following results were obtained.

Table 7

| BROOKFIELD VISCOSITY (Pa.s) | | | | |
|---|---|---|---|---|
| | FORMULATION A | | FORMULATION B | |
| THICKENER TYPE | Viscalex AH10 | Polymer E | Viscalex AH10 | Polymer E |
| ADDITION LEVEL (% Dry on Total) | 0.16 | 0.035 | 0.90 | 0.15 |
| Initial Viscosity | 9.1 | 8.6 | 5.8 | 6.0 |
| Day 1 Viscosity | 9.0 | 8.6 | 5.6 | 6.2 |
| Day 2 Viscosity | 9.0 | 3.6 | 5.8 | 6.2 |

The improved level of effiency of the polymers of the invention is clearly deomonstrated.

Printing Pastes

In the examples which follow, all print paste viscosities were measured with a Brookfield RVT viscometer at speed 10 rpm, spindle 6 at 20°C. Printing was carried out using a variety of screens, each being constructed of 156 mesh polyester filament

12

Example 8

A printing clear was prepared according to the recipe given in Table 8.

Table 8

| COMPONENT | % by wt |
|---|---|
| Ammonia (0.880) | 0.5 |
| Emulsifier* | 2.0 |
| Odourless kerosene | 40.0 |
| Binder latex (40% solids) | 12.0 |
| Polymer W | 1.7 |
| Water | 43.8 |

\* e.g., ethoxylated nonyl phenol (14 moles ethylene oxide)

A viscosity of 20 Pa•s (20,000 cp) was obtained after stirring for 10 minutes. The clear was then divided and pigment printing pastes prepared by mixing 9.6 parts of this stock with each of the following pigments:

(i) Imperom Blue KRR - 4 parts

(ii) Helizarin Bordeaux R - 4 parts

These pastes were then re-thickened by stirring in additional quantities of Polymer W until a viscosity of 20 Pa•s (20,000 cp) was again obtained. The amounts of Polymer W required were found to be 0.19 parts and 0.23 parts for the blue and bordeaux pigments respectively.

Both pastes were printed on to a plain woven 50/50 cotton fabric. The prints were then dried and cured for 4.5 minutes of 150°C. In each case excellent colour yeild, brightness and find line definition were observed.

Example 9

A series of printing clears was prepared in which the concentration of Polymer A was progressively increased. The recipes are given in Table 9a below, where all figures refer to parts by weight :

## Table 9a

| Component / Paste | A | B | C | D |
|---|---|---|---|---|
| Ammonia (0.880) | 0.5 | 0.5 | 0.5 | 0.5 |
| Binder latex (40% solids) | 12.0 | 12.0 | 12.0 | 12.0 |
| Water | 85.88 | 85.65 | 85.56 | 85.21 |
| Thickener[+] | 1.62 | 1.60 | 1.44 | 1.29 |
| Polymer A | – | 0.25 | 0.50 | 1.00 |

+ The thickener used was a 50% active dispersion of a cross-linked polyacrylic acid such on described in US 4554018. In each case the concentration employed was chosen so as to give a viscosity of 20 Pa·s (20,000 cp).

Printing pastes were then prepared from each clear by mixing 96 parts with 4 parts of the following black pigments and stirring by efficient mechanical means for 5 minutes.
(i) Imperon Black KGF
(ii) Acramin Black FBRK
The viscosity of each paste was then remeasured at 20°C. The results were as follows :

Table 9b

| PASTE | VISCOSITY (Pa.s) | |
|---|---|---|
| | Black KGF | Black FBRK |
| A | 50 | 66.0 |
| B | 29.4 | 30.6 |
| C | 23.0 | 25.2 |
| D | 19.6 | 20.2 |

The two pastes A, prepared without the addition of Polymer A, were highly viscous gels and were considered unsuitable for practical use. As the concentration of Polymer A was increased, the increase in viscosity, compared with the initial clears, was greatly reduced. All pastes B, C and D were of the correct rheology for commercial printing.

Example 10

Printing pastes were prepared using Polymer A and a cross-inked polyacrylic acid thickener in an analagous manner to that outlined above. The recipes were as follows, all figures referring to parts by weight.

**Table 10a**

| Paste Component | A | B | C | D | E | F | G | H |
|---|---|---|---|---|---|---|---|---|
| Ammonia (0.880) | 0.5 | 0.5 | 0.5 | 0.5 | 0.5 | 0.5 | 0.5 | 0.5 |
| Binder latex (40%) | 12.0 | 12.0 | 12.0 | 12.0 | 12.0 | 12.0 | 12.0 | 12.0 |
| Water | | | | | to 100% | | | |
| Thickener | 1.62 | 1.61 | 1.44 | 1.29 | 1.65 | 1.84 | 1.82 | 1.79 |
| Polymer A | – | 0.25 | 0.5 | 1.0 | – | 0.25 | 0.5 | 1.0 |
| Imperon Blue KRR | 4.0 | 4.0 | 4.0 | 4.0 | – | – | – | – |
| Helizarin Bordeaux R | – | – | – | – | 4.0 | 4.0 | 4.0 | 4.0 |

Each paste was printed on to a substrate which was known to cause severe flushing or haloing wen printed with many existing formulations. The fabric chosen was a plain woven 50/50 polyester/cotton which had been preresinated a using a DHDHEU resin and also contained a magnesium chloride catlyst.
The severity of flushing was critically assessed by using a printing screen which consisted of a series of five lines and criss-cross patterns. Immediately after printing, the fabric was allowed to dry for 2 minutes under atmospheric conditions before being dried at 150°C for 2 minutes (drying quickly causes the movement of print paste to be halted).

14

The extent to which flushing occurred was then assessed on an arbitary 1-10 scale, where 1 indicates a perfect print without any sign of flushing and 10 indicates severe flushing. The results are given below :

Table 10b

| PRINT PASTE | BLUE | PASTE | BORDEAUX |
|---|---|---|---|
| A | 8 | E | 8 |
| B | 5 | F | 3 |
| C | 3 | G | 3 |
| D | 2 | H | 2 |

The inclusion of Polymer A into the printing paste is clearly seen to bring about a dramatic improvement in print quality, with a 1% addition virtually eliminating flushing, it is considered that a rating of 3 or below would represent a commercially acceptable print.

Example 11

A latex was formed by oil in water emulsion polymerisation using ammonium persulphate of 40 parts by methacrylic acid, 50 parts by weight ethyl acrylate and 10 parts by weight of a surfactant ether formed from allyl chloride and the reaction product of polyoxyethylene (10 moles) stearyl ether with sodium methoxide.

200 grams of the latex was homogenised into an oil phase comprising 7.0grams of Span 80,23.3 grams of a 30% active solution of a 2:1 molar copolymer of ceto-stearyl methacrylate : hydroxyetylmetacrylate in SBP11, 39.2 grams of Pale Oil 60 and 96.0 grams of SBP11. The resulting inverse emulsion was then dehydrated by distilling off water and SBP11 under reduced pressure to a final pressure of 10 mm•Hg and a temperature of 95°C.

The resulting anhydrous polymer-in-oil dispersion was activated by mixing in 5.6 grams of Ethylan D254 to produce a self-emulsifiable liquid polymer-in-Oil dispersion having 50% active solids. Span and Ethylan are trade marks.

Upon addition of this dry dispersion to deionised water or 0.5% NaCl solution to form a 2% solution, the Brookfield viscosity at spindle 6 is 352 or 480 Pa•s (352,000 or 480,000 cps) respectively at 2.5 rpm and 28 or 35 Pa•s (28,000 or 35,000 cps) at 100 rpm.

Example 12

The process of Example 1, for Polymer A, was repeated except that the free acid monomer was replaced by a free base monomer as indicated in Table 12a. The Periankrol surfactant was replaced by Ethylan HA (non-ionic).

Polymers having the compositions indicated in the table below were prepared at 1% active in water by neutralisation with HCl, and the resulting viscosity was measured using a Brookfield RVT viscometer.

Table 12a

| Product | Monomer Ratio (% by wt.) | | | Surfactant Composition | | Solution Viscosity (Pa.s) @ 10 rpm (Pa.s) |
|---|---|---|---|---|---|---|
| | DMAEMA | NMA | AES | n | R | |
| Polymer AH | 45 | 35 | 20 | 10 | stearyl | 29 |
| Polymer AJ | 50 | 30 | 20 | 10 | stearyl | 68 |
| Polymer AK | 55 | 25 | 20 | 10 | stearyl | 136 |
| Polymer AL | 60 | 20 | 20 | 10 | stearyl | 80 |
| Polymer AM | 40 | 35 | 25 | 10 | stearyl | 74 |
| Polymer AN | 40 | 30 | 30 | 10 | stearyl | 27 |
| Polymer AP | 40 | 25 | 35 | 10 | stearyl | 5.2 |
| Polymer AQ | 40 | 20 | 40 | 10 | stearyl | 1.7 |

DMAEMA = dimethylaminoethylmethacrylate

MMA = methylmethacrylate

AES = allyl ether surfactant

In order to demonstrate the effectiveness of polymers of this type in thickening highly acidic media Polymer AH was used to thicken 15% solutions of different acids at 5% active polymer. The results obtained are given in Table 12B.

Table 12b

| Product | Acid Type (solution conc$^3$ w/w) | Solution Viscosity (Pa.s) @ 10 rpm |
|---|---|---|
| Polymer AH | 15% hydrochloric acid | 2.2 |
| Polymer AH | 15% phosphoric acid | 6.4 |
| Polymer AH | 15% acetic acid | 9.6 |

This polymer is useful for thickening aqueous acidic liquors, such as battery liquids.

## Claims

1. A polymer selected from polymers that are substantially non swelling and insoluble in water but soluble or swellable in aqueous acid or alkali, cross linked polymers, and linear polymers having intrinsic viscosity at least 0.5 (measured as single point at 0.05% concentration in methanol), and formed by oil-in-water emulsion polymerisation of
   (a) 5 to 90% by weight of ethylenically unsaturated ionic monomer
   (b) 5 to 90% by weight of water insoluble ethylenically unsaturated substantially non-ionic monomer
   (c) 1 to 90% by weight of an ethylenically unsaturated monomer that carries a pendant group $B_nR$ where B is ethylenoxy, n is zero or a positive integer, and R is a hydrocarbyl group of 8 to 30 carbons selected from alkyl, aralkyl, aryl, alkaryl and cycloalkyl
   (d) 0 to 1% by weight of cross linking agent that is polyethylenically unsaturated monomer,
      characterised in that monomers a, b, c and d are mixed before the polymerisation and that monomer (c) is an allyl ether of the formula $CH_2 = CR'CH_2OB_nR$ where R' is hydrogen or methyl.

2. A polymer according to claim 1 in which monomer (a) comprises a vinyl carboxylic acid monomer.

3. A polymer according to claim 2 in which monomer (a) is selected from acrylic acid and methacrylic acid and mixtures thereof.

4. A polymer according to claim 1 in which monomer (a) comprises a cationic monomer.

5. A polymer according to claim 4 in which monomer (a) is selected from dialkylaminoalkyl (meth) acrylate monomers and dialkylaminoalkyl (meth) acrylamide monomers.

6. A polymer according to any preceding claim in which, in monomer (c), R' is hydrogen, m and p are each zero and n is from 5 to 100.

7. A polymer according to any preceding claim in which, in monomer (c), R contains 10 to 24 carbon atoms and is selected from alkyl and alkaryl.

8. A polymer according to any preceding claim formed from 20 to 60% by weight acrylic acid and/or methacrylic acid, 5 to 60% by weight ethyl acrylate and 2 to 50% by weight of the allyl ether, and 0 to 1% cross linking agent.

9. A polymer according to any preceding claim in which monomer (b) is selected from styrene, alkylsubstituted styrenes, halo-substituted styrenes, (meth) acrylonitrile, vinyl alkanoates, vinyl halides, vinylidene halides, hydroxy alkyl (meth) acrylates, alkoxy alkyl (meth) acrylates and alkyl (meth) acrylates.

10. A polymer according to claim 9 in which monomer (b) is selected from $C_{1-4}$ alkyl (meth) acrylates.

11. A polymer according to any preceding claim in which the said cross linking agent was present during the polymerisation.

12. A polymer according to claim 11 in which the amount of the said cross linking agent was up to 0.2% by weight.

13. A polymer according to claim 11 in which the amount of the said cross-linking agent was up to 0.1% by weight.

14. A polymer according to any of claims 1 to 10 in which the polymer is linear, is formed in the absence of the cross linking agent, and has a molecular weight above 0.5 million.

15. A polymer according to any of claims 1 to 10 in which the polymer is linear, is formed in the absence of the cross linking agent and has intrinsic viscosity of at least 3.

16. Use of a polymer according to any preceding claim for thickening an aqueous composition.

17. A composition comprising a polymer according to any of claims 1 to 15 and which is in the form of an aqueous emulsion at a pH such that the polymer is insoluble and substantially unswollen and non-thickening but can be converted to a dissolved or swollen and thickening state by the addition of acid or alkali.

18. A composition comprising a polymer according to any of claims 1 to 15 and that is at a pH such that the polymer is dissolved or swollen and the composition is thickened by the polymer.

19. A composition according to claim 18 selected from print pastes and emulsion paints.

20. A composition according to any of claims 17 to 19 and which also contains surfactant in an amount of 0.05 to 1 part per part by weight polymer.

**Patentansprüche**

1. Polymer, ausgewählt unter Polymeren, welche in Wasser im wesentlichen nicht quellen und unlöslich sind, aber in wäßriger Säure oder Alkali löslich oder quellbar sind, vernetzten Polymeren und linearen Polymeren mit einer Grenzviskosität von mindestens 0,5 (gemessen als einziger Punkt bei einer Konzentration von 0,05% in Methanol), und gebildet durch Öl-in-Wasser-Emulsionspolymerisation von
    (a) 5 bis 90 Gew.-% eines ethylenisch ungesättigten ionischen Monomers,
    (b) 5 bis 90 Gew.-% eines ethylenisch ungesättigten, im wesentlichen nicht-ionischen Monomers,

EP 0 216 479 B2

(c) 1 bis 90 Gew.-% eines ethylenisch ungesättigten Monomers, welches eine daran hängende Gruppe $B_nR$ trägt, worin B für Ethylenoxy steht, n 0 oder eine positive ganze Zahl ist und R eine Kohlenwasserstoffgruppe mit 8 bis 30 Kohlenstoffatomen darstellt, ausgewählt unter Alkyl, Aralkyl, Aryl, Alkaryl und Cycloalkyl,

(d) 0 bis 1 Gew.-% eines Vernetzungsmittels, welches ein polyethylenisch ungesättigtes Monomer ist,

dadurch gekennzeichnet, daß die Monomere a, b, c und d vor der Polymerisation vermischt werden und daß das Monomer (c) ein Allylether der Formel $CH_2 = CR'CH_2OB_nR$ ist, worin R' für Wasserstoff oder Methyl steht.

2. Polymer nach Anspruch 1, worin das Monomer (a) ein Vinylcarbonsäure-monomer ist.

3. Polymer nach Anspruch 2, worin das Monomer (a) unter Acrylsäure und Methacrylsäure und Gemischen hievon ausgewählt ist.

4. Polymer nach Anspruch 1, worin das Monomer (a) ein kationisches Monomer ist.

5. Polymer nach Anspruch 4, worin das Monomer (a) unter Dialkylamino-alkyl(meth)acrylatmonomeren und Dialkylaminoalkyl(meth)acrylamidmonomeren ausgewählt ist.

6. Polymer nach einem der vorstehenden Ansprüche, worin im Monomer (c) R' für Wasserstoff steht, m und p beide 0 sind und n von 5 bis 100 beträgt.

7. Zusammensetzung nach einem der vorstehenden Ansprüche, worin im Monomer (c) R 10 bis 24 Kohlenstoffatome enthält und aus Alkyl und Alkaryl ausgewählt ist.

8. Polymer nach einem der vorstehenden Ansprüche, welches aus 20 bis 60 Gew.-% Acrylsäure und/oder Methacrylsäure, 5 bis 60 Gew.-% Ethylacrylat und 2 bis 50 Gew.-% des Allylethers und 0 bis 1% Vernetzungsmittel hergestellt wird.

9. Polymer nach einem der vorstehenden Ansprüche, worin das Monomer (b) unter Styrol, Alky-substituierten Styrolen, Halogen-substituierten Styrolen, (Meth)acrylnitril, Vinylalkanoaten, Vinylhalogeniden, Vinylidenhalogeniden, Hydroxyalkyl(meth)acrylaten, Alkoxyalkyl(meth)acrylatenund Alkyl(meth)acrylaten ausgewählt ist.

10. Polymer nach Anspruch 9, worin das Monomer (b) aus $C_{1-4}$-Alkyl(meth)acrylaten ausgewählt ist.

11. Zusammensetzung nach einem der vorstehenden Ansprüche, worin das genannte Vernetzungsmittel während der Polymerisation vorlag.

12. Zusammensetzung nach Anspruch 11, worin die Menge des genannten Vernetzungsmittels bis zu 0,2 Gew.-% betrug.

13. Zusammensetzung nach Anspruch 11, worin die Menge des genannten Vernetzungsmittels bis zu 0,1 Gew.-% betrug.

14. Polymer nach einem der Ansprüche 1 bis 10, worin das Polymer linear ist, in Abwesenheit des Vernetzungsmittels hergestellt wird und ein Molekulargewicht über 0,5 Millionen aufweist.

15. Polymer nach einem der Ansprüche 1 bis 10, worin das Polymer linear ist, in Abwesenheit des Vernetzungsmittels hergestellt wird und eine Grenzviskosität von mindestens 3 aufweist.

16. Verwendung eines Polymers nach einem der vorstehenden Ansprüche zum Verdicken einer wäßrigen Zusammensetzung.

17. Zusammensetzung, umfassend ein Polymer nach einem der Ansprüche 1 bis 15, welche in der Form einer wäßrigen Emulsion bei solch einem pH-Wert vorliegt, daß das Polymer unlöslich und im wesentlichen nicht gequollen und nicht verdickend ist, aber durch die Zugabe von Säure oder Alkali in

18

EP 0 216 479 B2

einen gelösten oder gequollenen und verdickenden Zustand übergeführt werden kann.

**18.** Zusammensetzung, umfassend ein Polymer nach einem der Ansprüche 1 bis 15, welche bei solch einem pH-Wert vorliegt, daß das Polymer gelöst oder gequollen ist und die Zusammensetzung durch das Polymer verdickt wird.

**19.** Zusammensetzung nach Anspruch 18, ausgewählt unter Druckpasten und Emulsionsfarben.

**20.** Zusammensetzung nach einem der Ansprüche 17 bis 19, welche auch ein grenzflächenaktives Mittel in einer Menge von 0,05 bis einem Teil je Gewichtsteil Polymer beinhaltet.

## Revendications

**1.** Un polymère choisi parmi les polymères qui sont substantiellement non gonflables et insolubles dans l'eau, mais solubles et gonflables dans un acide aqueux ou dans un alcali aqueux, les polymères réticulés et les polymères linéaires ayant une viscosité intrinsèque d'au moins 0,5 (mesurée en un seul point à une concentration de 0,05 % dans le méthanol), et formés par polymérisation en émulsion du type huile-dans-eau de :
   (a) 5 à 90 % en poids de monomère ionique éthyléniquement insaturé,
   (b) 5 à 90% en poids de monomère substantiellement non ionique éthyléniquement insaturé, insoluble dans l'eau,
   (c) 1 à 100 % en poids d'un monomère éthyléniquement insaturé qui porte un groupe pendant $B_nR$ dans lequel B est un groupe éthylèneoxy, n est égal à zéro ou un nombre entier positif, et R est un groupe hydrocarbyle de 8 à 30 atomes de carbone choisi parmi les groupes alkyles, aralkyles, aryles, alcaryles et cycloalkyles,
   (d) 0 à 1 % en poids d'un agent de réticulation qui est un monomère polyéthyléniquement insaturé, caractérisé en ce que les monomères (a), (b), (c) et (d) sont mélangés avant la polymérisation et que le monomère (c) est un éther allylique de formule $CH_2 = CR'CH_2OB_nR$ dans laquelle R' est un atome d'hydrogène ou un groupe méthyle.

**2.** Un polymère selon la revendication 1, selon lequel le monomère (a) comprend un monomère acide vinylcarboxylique.

**3.** Un polymère selon la revendication 2, selon lequel le monomère (a) est choisi parmi l'acide acrylique et l'acide méthacrylique et leurs mélanges.

**4.** Un polymère selon la revendication 1, selon lequel le monomère (a) comprend un monomère cationique.

**5.** Un polymère selon la revendication 4, selon lequel le monomère (a) est choisi parmi les monomères (méth)acrylate de dialkylaminoalkyle et les monomères dialkylaminoalkyl-(méth)acrylamide.

**6.** Un polymère selon l'une quelconque des revendications précédentes, selon lequel, dans le monomère (c), R' est un atome d'hydrogène, m et p sont égaux chacun à zéro et n est de 5 à 100.

**7.** Un polymère selon l'une quelconque des revendications précédentes, selon lequel, dans le monomère (c), R contient 10 à 24 atomes de carbone et est choisi parmi les groupes alkyles et alcaryles.

**8.** Un polymère selon l'une quelconque des revendications précédentes formé à partir de 20 à 60 % en poids d'acide acrylique et/ou d'acide méthacrylique, de 5 à 60 % en poids d'acrylate d'éthyle et de 2 à 50 % en poids d'éther allylique et de 0 à 1 % d'agent de réticulation.

**9.** Un polymère selon l'une quelconque des revendications précédentes, selon lequel le monomère (b) est présent et est choisi parmi les suivants : styrène, alkylstyrènes, halostyrènes, (méth)acrylonitrile, alcanoates de vinyle, halogénures de vinyle, halogénures de vinylidène, (méth)acrylates d'hydroalkyle, (méth)acrylates d'alcoxyalkyle et (méth)acrylates d'alkyle.

19

**10.** Un polymère selon la revendication 9, selon lequel le monomère (b) est choisi parmi les (méth)-acrylates de $C_{1-4}$-alkyle.

**11.** un polymère selon l'une quelconque des revendications précédentes, selon lequel ledit agent de réticulation est présent durant la polymérisation.

**12.** Un polymère selon la revendication 11, selon lequel la quantité dudit agent de réticulation peut atteindre 0,2 % en poids.

**13.** Un polymère selon la revendication 11, selon lequel la quantité dudit agent de réticulation peut atteindre 0,1 % en poids.

**14.** Un polymère selon l'une quelconque des revendications 1 à 10, selon lequel le polymère est linéaire, est formé en l'absence de l'agent de réticulation et a un poids moléculaire supérieur à 0,5 million.

**15.** Un polymère selon l'une quelconque des revendications 1 à 10, selon lequel le polymère est linéaire, est formé en l'absence de l'agent de réticulation et a une viscosité intrinséque d'au moins 3.

**16.** Utilisation d'un polymère selon l'une quelconque des revendications précédentes pour épaissir une composition aqueuse.

**17.** Une composition comprenant un polymère selon l'une quelconque des revendications 1 à 15 et qui est sous la forme d'une émulsion aqueuse à un pH tel que le polymère est insoluble et substantiellement non gonflé et non épaississant, mais peut être converti à l'état dissous ou gonflé et épaississant par l'addition d'un acide ou d'un alcali.

**18.** Une composition comprenant un polymère selon l'une quelconque des revendications 1 à 15 et qui est à un pH tel que le polymère est dissous ou gonflé et la composition est épaissie par le polymère.

**19.** Une composition selon la revendication 18, sélectionnée parmi les pâtes d'impression et les peintures en émulsion.

**20.** Une composition selon l'une quelconque des revendications 17 à 19 et qui contient également un surfactant en quantité de 0,05 à 1 partie par partie en poids de polymère.